# EUROPEAN PATENT APPLICATION

(11) **EP 2 468 156 A1**
(43) Date of publication of application: **27.06.2012**
(21) Application number: 10809449.1
(22) Date of filing: 26.02.2010
(51) Int. Cl.: A47J 36/02, C23C 4/12, C23C 4/06

(54) **MANUFACTURING METHOD FOR THERMALLY SPRAYED SANDWICH BOTTOM COOKING POT**

(30) Priority: 17.08.2009 CN 200910101681
(71) Applicant: Zhejiang Aishida Electric Co., Ltd., Zhejiang 317500 (CN)
(72) Inventor: CHEN, Helin, Zhejiang 317500 (CN); CHEN, Meirong, Zhejiang 317500 (CN); HUANG, Shuangxi, Zhejiang 317500 (CN); LIN, Hainjun, Zhejiang 317500 (CN)
(74) Representative: Schmid, Klaus Michael Johannes
(86) International application number: PCT/CN2010/070782
(87) International publication number: WO 2011/020316

(57) **Abstract**

This invention revealed a method of making thermally sprayed sandwich bottom cooking pot. Existing sandwich bottom pot might have the problem of abscission of metal plate when using them. This invention offers a new method of making thermally sprayed sandwich bottom cooking pot, the procedures are as follows: 1) Surface roughening: Roughen the outer surface of the pot by means of sand blasting until the roughness of outer surface is 5∼50 micrometers; 2) Thermal spraying: Spray metal on the bottom of the outer surface after roughening, forming close binder; 3) Compositing the pot body: Place metal plate on the binder which is described in Step 2), preheat them, and composite them under high pressure. In this way, the bond between the pot bottom and the metal plate is strong, and the problem of week binding of the bottom is solved.

## Description

### Technical Field

This invention relates to the production of kitchenware, and particularly to a method for manufacturing a pot comprising a thermally sprayed composite bottom.

### Background Art

Aluminum cannot be used for induction cooker because it is not a good conductor of magnetism. So pots with composite bottoms have emerged on the market. Most composite-bottom pots have a metal plate on the outermost layer (e.g. non-rust iron), and all of them use the method of attaching the metal plate to the bottom of the pot by means of a large tonnage press machine. There are also cast aluminum composite bottom pots with nails. In the heating process, different degrees of deformation occurs because of different expansion coefficients of the materials, which leads to a weak bond between the pot body and the metal plate. This might result in the metal plate falling off from the pot body. Therefore, some porous plates and concavo-convex plates have been designed. But the complicated manufacturing technology causes a high defective rate, which will results in low output of finished products.

### Summary of Invention

The technical problem to be solved is to overcome the existing technical flaws and provide a new method of making pot comprising a thermally sprayed composite bottom, thus elongating the service life of the pot.

To this end, this disclosure applies the following technique: a method for manufacturing a pot comprising a thermally sprayed composite bottom, the method comprising the steps of:

I. Surface roughening:

1) Adjusting the size of a fixture on a rotation plate of an automatic dry-type sand-blast machine; fixing the pot, which has been stretched, side scraped and washed, on the fixture, wherein the outer surface of the bottom of the pot faces upwards;

2) Adjusting the sand-blasting air pressure to be 0.6MPa∼0.8MPa, the sand-blasting distance to be 100∼150mm and a spraying angel to be 70°∼80°; performing roughening with alumina sand, controlling the sand-blasting time so that the outer surface roughness of the bottom of the pot reaches 5∼50 micrometers.

II. Thermally spraying:

1) Applying electric arc spraying, loading two metal wires with diameter of 1.6∼3.0mm in a spray gun, adjusting the spray pressure to be 0.4∼0.6MPa;

2) Controlling the spraying working voltage to be 30∼42V, the wire feed voltage to be 15∼20V; adjusting the distance between the spray gun and the roughened area of the outer surface of the bottom of the pot to be 140∼250mm; applying metal on the roughened area of the outer surface of the bottom of the pot to form a binding layer.

III. Compositing the pot:

1) Spot welding the thermally sprayed pot with a metal plate, then preheating them together in heating equipment. When the pot comprises cast aluminum, the temperature of the heating equipment may be controlled to be in the range of 400∼800°C; and when the pot comprises tensile aluminum, the temperature of the heating equipment may be controlled to be in the range of 560∼620°C;

2) Pressing the pot and the metal plate together with a press machine applying a pressure in the range of 10∼2500 Ton, to obtain a pot with a firm composite bottom. For a better compositing effect, the pressure is preferably in the range of 500∼2500 Ton.

**If** the metal plate mentioned above comprises stainless steel or non-rust iron, the thickness of the metal plate is preferably in the range of 0.4∼1.2mm.

When the the binding layer comprises aluminum or other metal (e.g. copper, silver, nickel, etc.), the expansion coefficients of the binding layer and the metal plate are close to each other, which increases the bond between the pot bottom and the metal plate and prevents the botton from falling off. The preferred thickness of the binding layer is in the range of 0.1∼2mm. Such thickness may be selected in view of a guaranteed utility of the pot and in consideration of the manufacturing cost.

This technique features the following advantages:

1. The pots made according to the technique can successfully pass a composite firmness test including 25 cycles of heating to 400°C and then flash cooling in room-temperature water, without the metal plate falling off (the standard requirements of stainless steel composite bottom pot). The firm bond between the pot bottom and the metal plate solves the technical problem of weak bond in composite pots;

2. The composite bottom of this invention is firmly attached to the pot, without the metal plate separating from the pot body, thus extending the service life of the pot.

3. With good manufacturing process and excellent properties of the products, this technique is suitable for manufacturing similar types of composite pots.

In the following, the technique is further described with reference to figures and embodiments.

### Brief description of drawings

Figure 1 illustrates the structure of a pot manufactured according to the invention.

Figure 2 is an enlarged view of the "A" region in Figure 1.

### Description of embodiments

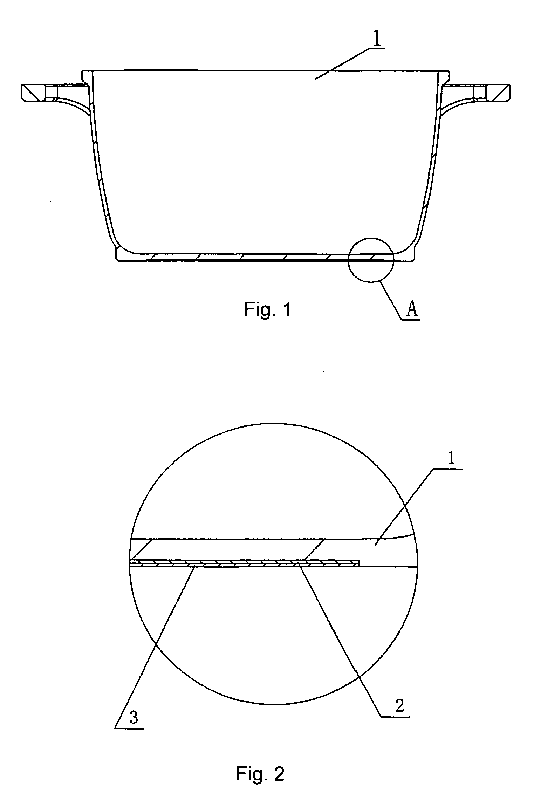

A specific manufacturing procedure of the pot shown in Figures 1-2 is as follows:

1. Surface roughening:

1) Adjusting the size of a fixture on a rotation plate of an automatic dry-type sand-blast machine with four working positions; fixing the pot, which has been stretched, side scraped and washed, on the fixture, wherein the outer surface of the bottom of the pot faces upwards;

2) Adjusting the sand-blasting air pressure to be 6-8 kgf/cm² (0.6∼0.8MPa), the sand-blasting distance to be 100∼150mm and the spray angle to be 70°∼80°; performing roughening with 36 mesh alumina sand, controlling the sand-blasting time so that the outer surface roughness of the bottom of the pot reaches 10∼20 micrometers.

2. Thermally spraying:

1) Applying electric arc spraying, loading two metal wires with diameter of 1.6∼3.0mm in a spray gun, adjusting the spray pressure to be 0.4∼0.6MPa;

2) Controlling the spraying working voltage to be 30∼42V, the wire feed voltage to be 15∼20V; adjusting the distance between the spray gun and the roughened area of the outer surface of the bottom of the pot to be about 150mm; controlling the spray time to be 2∼100 seconds; the binding layer 2 with suitable thickness can thus be formed.

3. Compositing the pot body:

1) Spot welding the thermally sprayed pot with the metal plate 3, then preheating them together in heating equipment prior to compositing. The temperature of the heating equipment may be kept between 400°C and 620°C;

2) Pressing the pot and the metal plate together using a press machine applying a pressure in the range of 500∼2500 Ton; obtaining the pot with a firm composite bottom.

According to practical requirements, the above-mentioned thicknesses of the binding layer and that of the metal plate may be chosen in the range of 0.1∼2mm and 0.4∼1.2mm respectively, and the surface roughness may be chosen in the range of 5∼50 micrometers.

What is described above are only preferable embodiments which should not be considered to be any kind of confinement of the technical proposal of this invention. Any simple recompositions, equivalent changes or modifications based on the technical proposal above fall in the scope of protection of this invention.

## Claims

1. A method for manufacturing a pot comprising a thermally sprayed composite bottom, the method comprising the steps of: 1) Surface roughening:
Roughening an outer surface of a bottom of the pot by means of sand blasting so that roughness of the outer surface reaches 5∼50 micrometers; 2) Thermal spraying: Thermally spraying metal onto the roughened outer surface of the bottom of the pot, to form a binding layer; 3) Compositing pot body: Placing a metal plate on the binding layer formed at Step 2), preheating them together, and applying pressure to form the pot with the composite bottom.

2. The method of claim 1 wherein surface roughening comprises the steps of: 1) Adjusting the size of a fixture on a rotation plate of an automatic dry-type sand-blast machine, fixing the pot, which has been stretched, side scraped and washed, on the fixture, with the outer surface of the bottom of the pot facing upwards; 2) Adjusting the sand-blasting air pressure to be 0.6MPa∼0.8MPa, the sand- blasting distance to be 100∼150mm and a spray angel to be 70°∼80°; performing the roughening with alumina sand, controlling the sand-blasting time so that the outer surface roughness of the bottom of the pot reaches 5∼50 micrometers.

3. The method of claim 1 or 2 wherein thermal spraying comprises the steps of:
1) Using electric arc spraying, loading two metal wires with diameter of 1.6∼3.0mm in a spray gun, adjusting the spray pressure to be 0.4∼0.6MPa;
2) Adjusting the spraying working voltage to be 30∼42V, the wire feed voltage to be 15∼20V, the distance between the spray gun and the roughened area of the outer surface of the bottom of the pot to be 140∼250mem; applying metal over the roughened area to form the binding layer.

4. The method of claim 3 wherein compositing the pot body comprises the steps of: 1) Spot welding the thermally sprayed pot with the metal plate, then preheating them in heating equipment prior to compositing; 2) Pressing the pot and the metal plate together using a press machine applying a pressure in the range of 10∼2500 Ton, to obtain the pot with the composite bottom.

5. The method of claim 4 wherein the temperature of the heating equipment is controlled to be in the range of 400∼800°C when the pot comprises cast aluminum.

6. The method of claim 4 wherein the temperature of the heating equipment is controlled to be in the range of 560∼620°C when the pot comprises tensile aluminum.

7. The method of claim 4 wherein the pressure applied by the press machine is in the range of 500∼2500 Ton.

8. The method of claim 4 wherein the metal plate comprises stainless steel or non-rust iron.

9. The method of claim 8 wherein the metal plate has a thickness in the range of 0.4∼1.2mm.

10. The method of claim 4 wherein the binding layer has a thickness in the range of 0.1∼2mem.
